# EUROPÄISCHE PATENTSCHRIFT

(11) **EP 0 967 125 B1**
(45) Veröffentlichungstag und Bekanntmachung des Hinweises auf die Patenterteilung: **19.11.2003**
(21) Anmeldenummer: 99111801.9
(22) Anmeldetag: 18.06.1999
(51) Int. Cl.: B60R 21/16

(54) **Verfahren und Vorrichtung zum Falten eines aufblasbaren Luftsacks**
Method and means for folding an inflatable air bag
Méthode et dispositif pour plier un sac de sécurité gonflable

(30) Priorität: 22.06.1998 DE 19827725
(43) Veröffentlichungstag der Anmeldung: 29.12.1999
(73) Patentinhaber: Delphi Technologies, Inc., Troy, MI 48007 (US)
(72) Erfinder: Borowski, Joachim, 71120 Grafenau (DE); Varcus, Johannes, 58332 Schwelm (DE)
(74) Vertreter: Manitz, Finsterwald & Partner GbR

(56) Entgegenhaltungen:
- WO-A-97/12782
- WO-A-98/04442
- DE-A- 19 535 565
- US-A- 5 022 676
- US-A- 5 360 387

## Beschreibung

Die Erfindung betrifft ein Verfahren sowie eine Vorrichtung zum Falten eines aufblasbaren Luftsacks für Kraftfahrzeuge.

Derartige Verfahren und Vorrichtungen dienen dazu, einen aufblasbaren Luftsack auf eine Größe zusammenzufalten, die es gestattet, den gefalteten Luftsack als Teil eines Luftsackmoduls beispielsweise als Fahrer-, Beifahrer- oder Seitenairbag an einem Fahrzeug zu montieren. Hierbei muß der Luftsack so gefaltet werden, daß er sich beim Aufblasen in einem Crashfall so schnell wie möglich und ohne Beschädigungen der Luftsackhülle entfalten kann.

Aus der WO-A-9804442 und der DE-A-195 35 565 sind eine Vorrichtung und ein Verfahren zum Falten eines aufblasbaren Luftsacks bekannt welche eine mechanische Fixierung zur Bildung der inneren Hauptfalten und Druckluft zur Bildung der äußeren Hauptfalten verwenden. Ein Gehäuse das den Gassack umgibt ist nicht vorgesehen.

Es ist das der Erfindung zugrundeliegende Problem (Aufgabe), ein Verfahren sowie eine Vorrichtung zum Falten eines aufblasbaren Luftsacks zu schaffen, mit denen ein Luftsack schnell und kostengünstig und dennoch derart faltbar ist, daß er sich im Crashfall optimal entfalten kann.

Die Lösung dieser Aufgabe erfolgt durch die Merkmale des das Faltverfahren betreffenden Anspruchs 1 und insbesondere dadurch, daß das Verfahren die Schritte umfaßt, daß in einem Gehäuse ein zu faltender Luftsack mit seinem geschlossenen Ende an einem Oberteil des Gehäuses fixiert und mit seinem offenen Ende an einem dem Oberteil gegenüberliegenden Bodenelement derart befestigt wird, daß das Bodenelement das Innere des Luftsacks gegenüber dem Innenraum des Gehäuses abdichtet, daß das Gehäuse und das Bodenelement relativ zueinander aufeinander zu bewegt werden, und daß während der Relativbewegung der Druck innerhalb des Luftsacks oder des Luftsacks und des Gehäuses variiert wird.

Die Erfindung stellt ein besonders einfaches Faltverfahren zur Verfügung, bei dem im wesentlichen lediglich ein Gehäuse und ein dazu relativ bewegbares Bodenelement erforderlich sind. Darüber hinaus kann das Verfahren weitgehend automatisch durchgeführt werden. Ein weiterer Vorteil der Erfindung besteht darin, daß die Faltung des Luftsacks praktisch berührungsfrei erfolgt, so daß die Gefahr von Beschädigungen des Luftsacks gering ist.

Gemäß einer bevorzugten Ausführungsform der Erfindung wird der Druck lediglich innerhalb des Luftsacks und derart variiert, daß der Druck abwechselnd höher und niedriger als ein mittlerer, bevorzugt dem Umgebungsdruck entsprechender Wert Po ist. Hierdurch wird erzielt, daß der noch nicht gefaltete Bereich des Luftsacks abwechselnd nach außen in Richtung der Gehäuseinnenwand gedrückt und von der Gehäuseinnenwand weg auf eine Mittelachse des Gehäuses zu gezogen bzw. gesaugt wird. Auf diese Weise wird der Luftsack in dem Bereich zwischen der Mittelachse des Gehäuses und dessen Innenwand mäanderförmig in Falten gelegt.

Gemäß einer anderen Ausführungsform der Erfindung wird der Druck innerhalb des Luftsacks und des Gehäuses derart variiert, daß er im Luftsack stets höher und im Gehäuse stets niedriger als ein mittlerer, bevorzugt dem Umgebungsdruck entsprechender Wert P'₀ ist, oder derart, daß er im Luftsack abwechselnd höher und niedriger als im Gehäuse, jedoch stets sowohl im Gehäuse als auch im Luftsack höher als ein bevorzugt dem Umgebungsdruck entsprechender Wert ist.

In der ersten Alternative dieser Ausführungsform wirken beide Drücke grundsätzlich in dieselbe Richtung derart, daß der Luftsack sowohl an die Gehäuseinnenwand gedrückt als auch von der Gehäuseinnenwand aus angesaugt wird. Zusätzlich werden die Drücke in einer bestimmten, von der konkreten Ausgestaltung des Bodenelements und des Gehäuses abhängigen Art und Weise derart variiert, daß der Luftsack in der gewünschten Weise gefaltet werden kann.

In der zweiten Alternative dieser Ausführungsform arbeiten die beiden Drücke gegeneinander, wobei in Abhängigkeit davon, welcher Druck gerade höher ist, der Luftsack entweder in Richtung der Gehäuseinnenwand oder von dieser weg gedrückt wird.

Nach einem weiteren bevorzugten Ausführungsbeispiel der Erfindung wird innerhalb des Luftsacks und/ oder des Gehäuses eine inhomogene Druckverteilung erzeugt. Hierdurch kann zu jedem Zeitpunkt während der Relativbewegung des Gehäuses und des Bodenelements der noch nicht gefaltete Bereich des Luftsacks in jede beliebige Form gebracht werden.

Das erfindungsgemäße Faltverfahren ermöglicht es daher, gezielt eine bestimmte Faltenstruktur hervorzurufen, wobei bevorzugt der Luftsack nach Art eines Schlafsacks zusammengelegt wird.

Die Lösung des der Erfindung zugrundeliegenden Problems (Aufgabe) erfolgt außerdem durch die Merkmale des die Faltvorrichtung betreffenden Anspruchs 7 und insbesondere dadurch, daß ein Gehäuse und ein Bodenelement vorgesehen sind, wobei im Gehäuse ein zu faltender Luftsack mit seinem geschlossenen Ende an einem dem Bodenelement gegenüberliegenden Oberteil des Gehäuses fixierbar und mit seinem offenen Ende am Bodenelement derart befestigbar ist, daß das Bodenelement das Innere des Luftsacks gegenüber dem Innenraum des Gehäuses abdichtet, wobei das Gehäuse und das Bodenelement relativ zueinander aufeinander zu bewegbar sind und das Bodenelement mit wenigstens einer Steueröffnung versehen ist, über die der Druck innerhalb des zu faltenden Luftsacks variierbar ist.

Durch die Erfindung wird eine besonders einfach aufgebaute Faltvorrichtung geschaffen, die ein weitgehend automatisches und berührungsloses Falten eines Luftsacks ermöglicht.

Gemäß einer bevorzugten Ausführung der Erfindung entspricht der in einer Endstellung vom Gehäuse und dem Bodenelement begrenzte Raum zumindest näherungsweise dem Raum, der in einem Luftsackmodul-Gehäuse für den gefalteten, bevorzugt die endgültige Packungsgröße aufweisenden Luftsack zur Verfügung steht. Hierdurch kann der mit der erfindungsgemäßen Vorrichtung gefaltete Luftsack unmittelbar nach Abschluß des Faltvorgangs in ein Luftsackmodul integriert werden, wodurch die zur Herstellung des Luftsackmoduls erforderliche Zeit verkürzt wird.

Nach einem weiteren bevorzugten Ausführungsbeispiel der Erfindung ist der dem Bodenelement zugewandte Rand eines als Kappe ausgebildeten Oberteils des Gehäuses als Anschlagfläche ausgebildet, die in einer Endstellung mit dem Bodenelement oder mit einem auf dem Bodenelement angeordneten Luftsackmodul zusammenwirkt, wobei bevorzugt der zu faltende Luftsack im mit einem Halteelement und/oder einer Bodenplatte eines Luftsackmoduls verbundenen Zustand am Bodenelement befestigbar ist. Bei dieser Ausführungsform wird somit durch das als Kappe ausgebildete Oberteil des Gehäuses ein Luftsackmodul-Gehäuse simuliert. In der Endstellung kommt die Anschlagfläche der Kappe an einem auf dem Bodenelement angeordneten Luftsackmodul, insbesondere einem Halteelement oder einer Bodenplatte, zur Anlage. Nach der Entnahme des den gefalteten Luftsack aufweisenden Luftsackmoduls aus dem Gehäuse der Faltvorrichtung braucht somit nur noch das Luftsackmodul-Gehäuse aufgesetzt zu werden.

Wenn gemäß einem weiteren bevorzugten Ausführungsbeispiel die das Oberteil des Gehäuses bildende Kappe von der Gehäusewand lösbar ausgebildet ist, kann nach dem Faltvorgang die Verbindung zwischen Gehäusewand und Kappe gelöst und anschließend das komplette, einbaufertige Luftsackmodul, dessen Gehäuse von der Kappe gebildet wird, entnommen werden. Es braucht dann lediglich noch eine Verbindung zwischen der Kappe und dem Halteelement bzw. der Bodenplatte des Luftsackmoduls hergestellt zu werden. Für den nächsten Faltvorgang wird dann eine neue Kappe als Oberteil mit der verbliebenen Gehäusewand verbunden.

Gemäß einem weiteren bevorzugten Ausführungsbeispiel der Erfindung ist das Gehäuse unter Ausbildung eines Zwischenraumes von einer Haube umgeben und mit wenigstens einer Steueröffnung zum Zwischenraum versehen, über die der Druck im Innenraum des Gehäuses variierbar ist. Diese Ausführungsform ermöglicht es, zusätzlich auf den zu faltenden Luftsack von außen einzuwirken, indem an den durch den Zwischenraum zwischen dem Gehäuse und der Haube gebildeten Raum eine Druckund/oder Vakuumquelle angeschlossen wird. Die Möglichkeiten, unterschiedliche Faltstrukturen hervorzurufen, werden hierdurch erweitert.

Gemäß einer weiteren Ausführungsform der Erfindung sind/ist das Gehäuse und das Bodenelement oder nur das Bodenelement mit mehreren Steueröffnungen versehen, die zur Erzeugung einer bestimmten Druckverteilung über das Gehäuse und das Bodenelement oder nur über das Bodenelement verteilt angeordnet und von unterschiedlicher Größe sind. Hierdurch kann insbesondere eine inhomogene Druckverteilung innerhalb des Gehäuses und/oder des Luftsacks hergestellt werden, die für eine größere Freiheit bei der Gestaltung der Faltenstruktur des Luftsacks sorgt.

Weitere vorteilhafte Ausführungsformen der Erfindung betreffend sowohl das Faltverfahren als auch die Faltvorrichtung sind in den Unteransprüchen, der Beschreibung und der Zeichnung angegeben.

Die Erfindung wird im folgenden beispielhaft anhand der Zeichnung beschrieben. Es zeigen:
- Fig. 1: eine Seitenansicht einer Ausführungsform einer erfindungsgemäßen Faltvorrichtung,
- Fig. 2: ein Beispiel für die zeitlichen Verläufe einer auf ein Gehäuse der Vorrichtung von Fig. 1 einwirkenden Kraft und des Drucks, der von einer an den zu faltenden Luftsack angeschlossenen Druck-/Vakuumquelle erzeugt wird,
- Fig. 3: die Vorrichtung von Fig. 1 in einer Endstellung mit einem Beispiel für einen gefalteten Luftsack,
- Fig. 4: eine Seitenansicht einer weiteren Ausführungsform einer erfindungsgemäßen Faltvorrichtung, und
- Fig. 5: für die Vorrichtung von Fig. 4 ein Beispiel für die zeitlichen Verläufe der in Fig. 2 gezeigten Größen und zusätzlich des Drucks, der durch eine an das Gehäuse angeschlossene Druck-/Vakuumquelle erzeugt wird.

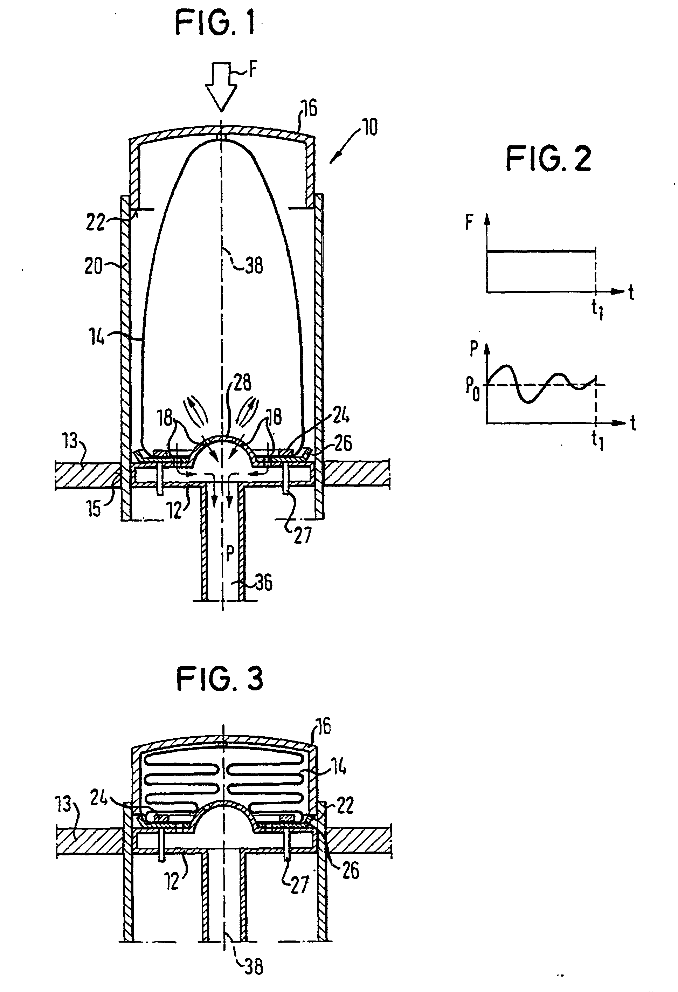

In der Ausführungsform einer erfindungsgemäßen Faltvorrichtung gemäß Fig. 1 ist ein zu faltender Luftsack 14 in einem Gehäuse 10 angeordnet und mit seinem geschlossenen Ende an einem als Kappe ausgebildeten Oberteil 16 des Gehäuses 10 mittig fixiert.

Die Seitenwand 20 des Gehäuses 10 ist durch einen Spalt 15 zwischen einem Bodenelement 12 und einer Arbeitsplatte 13 hindurchgeführt. Das Bodenelement 12 ist in einer Ebene mit der Arbeitsplatte 13 angeordnet und kann als Bestandteil der Arbeitsplatte 13 ausgebildet sein.

Das offene Ende des Luftsacks 14 ist an einem ringförmigen Halteelement 24 und einer Bodenplatte 26 angebracht, die Bestandteile eines an einem Fahrzeug montierbaren Luftsackmoduls sind.

Über Verankerungsstifte 27 der Bodenplatte 26, die durch entsprechende Öffnungen im Bodenelement 12 hindurchgeführt sind, ist das Luftsackmodul 24, 26 am Bodenelement 12 befestigt.

Die Anbringung des Luftsacks 14 am Luftsackmodul 24, 26 sowie des Luftsackmoduls 24, 26 am Bodenelement 12 erfolgt derart, daß das Innere des Luftsacks 14 zum Gehäuse 10 hin abgedichtet ist.

Das Bodenelement 12 ist hohl ausgeführt und in dem Bereich, der dem Inneren des Luftsacks 14 zugewandt ist, mit Steueröffnungen 18 versehen, von denen in Fig. 1 vier dargestellt sind. Zwei der dargestellten Steueröffnungen 18 sind in einem zentralen, etwa halbkugelartig geformten Bereich 28 des Bodenelements 12 ausgebildet, der entsprechend einem Gasgenerator für den zu faltenden Luftsack 14 geformt ist. Die anderen Steueröffnungen 18 sind zwischen dem Gasgenerator-Bereich 28 und dem Halteelement 24 ausgebildet.

Über einen zentralen Steuerkanal 36 ist das Bodenelement 12 an eine nicht dargestellte Druck-/Vakuumquelle anschließbar, die somit in der Lage ist, über die Steueröffnungen 18 den Druck innerhalb des Luftsacks 14 zu variieren.

Das Oberteil 16 des Gehäuses 10 ist als eine Kappe ausgebildet, die einen parallel zum Bodenelement 12 verlaufenden Deckelabschnitt, an dem der Luftsack 14 fixiert ist, und eine senkrecht dazu verlaufende Seitenwand aufweist, die von der Seitenwand 20 des Gehäuses 10 außenseitig umfaßt ist. Folglich ist an der Gehäuseinnenwand eine Stufe ausgebildet, wobei der dem Bodenelement 12 zugewandten Rand des kappenförmigen Oberteils 16 eine parallel zum Bodenelement 12 verlaufende Anschlagfläche 22 aufweist.

Die freie innere Querschnittsfläche des Gehäuses 10 ist in einer Ebene senkrecht zu dessen gestrichelt gezeichneter Mittelachse 38 bis zur Anschlagfläche 22 des Oberteils 16 konstant, wobei die Form dieser Querschnittsfläche der Form entspricht, die der Luftsack 14 im gefalteten Zustand aufweisen soll. Beispielsweise kann die Querschnittsfläche des Gehäuses 10 kreisförmig, quadratisch, rechteckig oder dreieckig sein, wobei Eckbereiche abgerundet sein können.

Das Gehäuse 10 kann sich abweichend von der Ausführungsform gemäß Fig. 1 in Richtung des Oberteils 16 beispielsweise trichterartig verjüngen. Im gefalteten Luftsack nimmt dann die Faltenlänge mit zunehmender Entfernung vom Bodenelement 12 ab.

Das Gehäuse 10 ist relativ zum Bodenelement 12 und der Arbeitsplatte 13 bewegbar. Dazu ist es mit einer von einer nicht gezeigten Antriebseinrichtung bereitgestellten Kraft F beaufschlagbar, die entweder am freien, durch den Spalt 15 zwischen dem Bodenelement 12 und der Arbeitsplatte 13 ragenden Ende oder am Oberteil 16 des Gehäuses 10 angreift und in Richtung des großen Pfeils von Fig. 1 wirksam ist.

Um einen Luftsack 14 mit der in Fig. 1 dargestellten Vorrichtung zu falten, werden das Gehäuse 10 und das Bodenelement 12 zunächst in eine Ausgangsstellung gemäß Fig. 1 gebracht. In dieser Ausgangsstellung entspricht der Abstand zwischen der Stelle, an welcher der Luftsack 14 am Oberteil 16 des Gehäuses 10 anbringbar ist, und dem Bodenelement 12 der Länge des Luftsacks 14 im vollständig entfalteten Zustand.

Dann wird der Luftsack 14 am Oberteil 16 und am Bodenelement 12 befestigt. Hierzu kann beispielsweise eine nicht dargestellte Zugangsöffnung in der Seitenwand 20 des Gehäuses 10 vorgesehen sein. Alternativ kann der Luftsack 14 auch bei abgenommenem Gehäuse 10 zunächst am Bodenelement 12 befestigt und beim Aufsetzen des Gehäuses 10 an dessen Oberteil 16 fixiert werden.

Anschließend wird entsprechend den in Fig. 2 gezeigten Diagrammen gleichzeitig das Gehäuse 10 durch die zeitlich konstante Kraft F auf das Bodenelement 12 zu bewegt und der Druck innerhalb des Luftsacks 14 über den Steuerkanal 36 und die Steueröffnungen 18 mittels einer an den Steuerkanal 36 angeschlossenen Druck-/Vakuumquelle variiert. Vorzugsweise erfolgt die Relativbewegung mit konstanter Geschwindigkeit.

Die Druckvariation erfolgt derart, daß ein Druck P innerhalb des hohlen Bodenelements 12 etwa sinusförmig mit abnehmender Amplitude verläuft und abwechselnd höher und niedriger als ein dem Umgebungsdruck entsprechender Wert Po eingestellt wird. Der Druck innerhalb des Luftsacks 14 folgt dem Druck P, wobei die zeitliche Verzögerung von der Anzahl und der Größe der Steueröffnungen 18 abhängt.

Die Luftsackhülle wird durch die Druckvariation abwechselnd in Richtung der Gehäuseinnenwand gedrückt und nach innen in Richtung der Mittelachse 38 des Gehäuses 10 gezogen. In Fig. 1 befindet sich die Vorrichtung gerade im Saugbetrieb, was durch Einklammern der einen Druckbetrieb symbolisierenden kleinen Pfeile angedeutet ist.

Folglich bewegt sich auch der noch nicht gefaltete Bereich der Luftsackhülle, der dem Bodenelement 12 am nächsten ist, periodisch zwischen der Gehäuseinnenwand und der Mittelachse 38 des Gehäuses 10 hin und her, wobei die Druck-/Vakuumquelle so eingestellt ist, daß von Druck- auf Vakuumbetrieb in dem Moment umgeschaltet wird, in dem die Luftsackhülle gegen die Innenwand des Gehäuses 10 stößt.

Am Ende des Faltvorgangs - zum Zeitpunkt t₁ in Fig. 2 - liegt das Oberteil 16 des Gehäuses mit seiner Anschlagfläche 22 gemäß Fig. 3 an einem vom Bodenelement 12 weg gebogenen Randabschnitt der Bodenplatte 26 an. Der Luftsack 14 ist in der in Fig. 3 skizzierten Weise derart gefaltet, daß ein um die Mittelachse 38 des Gehäuses angeordneter, in Falten gelegter Ringbereich vorhanden ist, wobei das geschlossene Ende des Luftsacks 14 deckelartig über dem gefalteten Ringbereich liegt.

Die Steueröffnungen 18 des Bodenelements 12 können so angeordnet und dimensioniert sein, daß bei einer Änderung des Drucks P im hohlen Bodenelement 12 die entsprechende Druckänderung im Luftsack 14 an unterschiedlichen Stellen unterschiedlich schnell erfolgt.

Auf diese Weise kann innerhalb des Luftsacks 14 eine inhomogene Druckverteilung erzeugt und diese dazu genutzt werden, die Form des Luftsacks 14 gezielt während der Relativbewegung von Gehäuse 10 und Bodenelement 12 derart zu steuern, daß dem Luftsack 14 die jeweils gewünschte Faltenstruktur verliehen wird.

In der bevorzugten Ausführungsform ist das Oberteil 16 mit der Seitenwand 20 lösbar verbunden, so daß am Ende des Faltvorgangs die Verbindung zwischen dem Oberteil 16 und der Seitenwand 20 gelöst werden kann. Das Oberteil 16 bildet dann das Gehäuse des Luftsackmoduls, das am Ende des Faltvorgangs folglich komplett und einbaufertig entnommen werden kann. Für den nächsten Faltvorgang wird dann ein neues Oberteil, d. h. das Luftsackmodul-Gehäuse für den nächsten zu faltenden Luftsack, mit der verbliebenen Seitenwand 20 verbunden. Bei einer derartigen Ausführungsform könnte somit das Oberteil 16 als eigentliches Gehäuse und die Seitenwand - bei kreisförmigen Querschnitt - als Zylinder bezeichnet werden.

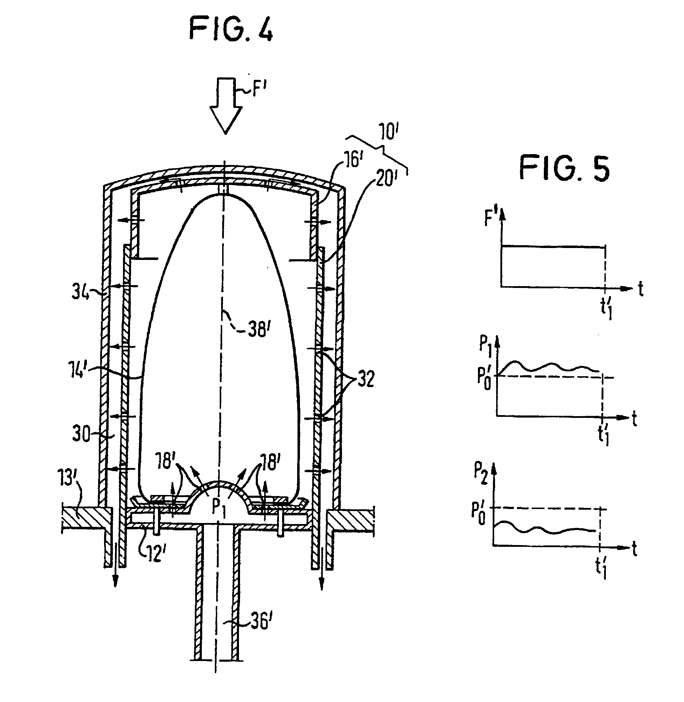

Die Ausführungsform einer erfindungsgemäßen Faltvorrichtung gemäß Fig. 4 entspricht hinsichtlich Aufbau, Funktionsweise und vorteilhaften Wirkungen der Ausführungsform von Fig. 1, mit Ausnahme der im folgenden beschriebenen Unterschiede.

Gemäß Fig. 4 ist das Gehäuse 10' mit einer auf der Arbeitsplatte 13' feststehenden Haube 34 unter Ausbildung eines Zwischenraumes 30 umgeben. Das Gehäuse 10' ist mit Steueröffnungen 32 versehen, die über die Oberfläche des Gehäuses 10' verteilt angeordnet sind und das Innere des Gehäuses 10' mit dem Zwischenraum 30 strömungstechnisch verbinden.

Die Arbeitsplatte 13' ist mit einem Kragen versehen, der parallel und beabstandet zur Seitenwand 20' des Gehäuses verläuft und auf diese Weise eine Fortsetzung des Zwischenraumes 30 bildet. Dieser Bereich kann gemäß Fig. 4 als um die Mittelachse 38' des Gehäuses 10' verlaufender Ringspalt ausgebildet sein, über den der Zwischenraum 30 an eine Druck-/Vakuumquelle anschließbar ist. Alternativ kann der Zwischenraum 30 auch etwa in Höhe des Bodenelements 12' enden und lediglich über einen rohrartigen Anschlußkanal an eine Druck-/Vakuumquelle angeschlossen werden.

Die Breite des Zwischenraumes 30 ist in der Ausführungsform gemäß Fig. 4 nicht konstant und am größten im Bereich der Seitenwand und am kleinsten im Bereich eines Deckelabschnitts des Oberteils 16'.

Zum Falten des Luftsacks 14' wird bei der Faltvorrichtung gemäß Fig. 4 das Gehäuse 10' ebenfalls durch Beaufschlagen mit einer zeitlich konstanten Kraft F' gemäß Fig. 5 und bevorzugt mit einer konstanten Geschwindigkeit durch den Spalt zwischen der Arbeitsplatte 13' und dem Bodenelement 12' hindurchgeführt.

Abweichend von dem anhand von Fig. 1 und 2 beschriebenen Faltverfahren wird in dem Beispiel gemäß Fig. 5 der Druck P₁ im hohlen Basiselement (Bodenelement) 12' zwar auch periodisch, und zwar etwa sinusförmig und mit abnehmender Amplitude variiert, befindet sich jedoch stets oberhalb eines Drucks P'₀, der bevorzugt dem Umgebungsdruck entspricht. Der Druck P₂ im Zwischenraum 30 wird dabei ebenfalls periodisch, und zwar etwa sinusförmig und mit abnehmender Amplitude variiert, ist jedoch stets kleiner als der Druck P'₀.

Die Luftsackhülle wird somit stets von innerhalb des Luftsacks 14' gegen die Innenwand des Gehäuses 10' gedrückt und gleichzeitig von außerhalb des Luftsacks 14' an die Gehäuseinnenwand gezogen bzw. gesaugt, d.h. der Druck innerhalb des Luftsacks 14' und der Druck innerhalb des Gehäuses 10' wirken in die gleiche Richtung.

Die zeitliche Variation der Drücke erfolgt erfindungsgemäß derart, daß die Luftsackhülle zu jedem Zeitpunkt eine Lage innerhalb des Gehäuses 10' einnimmt, die es dem Bodenelement 12' und dem Oberteil 16' während ihrer Relativbewegung gestatten, den Luftsack 14' in der gewünschten Weise in Falten zu legen.

Dabei können die Steueröffnungen 18' des Bodenelements 12' und die Steueröffnungen 32 des Gehäuses 10' jeweils so angeordnet und dimensioniert sowie die Breite des Zwischenraumes 30 derart bemessen sein, daß bei einer Änderung des Drucks P₁ im hohlen Bodenelement 12' bzw. des Drucks P₂ im Zwischenraum 30 die entsprechende Druckänderung im Luftsack 14' bzw. im Gehäuse 10' an unterschiedlichen Stellen unterschiedlich schnell erfolgt.

Auf diese Weise wird innerhalb des Luftsacks 14' bzw. des Gehäuses 10' eine inhomogene Druckverteilung erzeugt, die dazu ausgenutzt werden kann, die Form des Luftsacks 14' gezielt zu steuern und dem Luftsack 14' somit jede gewünschte Faltenstruktur zu verleihen.

Abweichend von der vorstehend beschriebenen Vorgehensweise können beide Drücke P₁ und P₂ stets größer als der Umgebungsdruck eingestellt und zeitlich derart variiert werden, daß sie zwar einander entgegen wirken, jedoch abwechselnd der eine oder der andere Druck höher ist. Auch auf diese Weise kann die Luftsackhülle beispielsweise periodisch zwischen der Gehäuseinnenwand und der Mittelachse des Gehäuses hin- und hergesteuert werden, um eine mäanderförmig in Falten gelegte Luftsackhülle hervorzurufen.

Eine Faltstruktur, bei der die Luftsackhülle ebenfalls etwa mäanderförmig in Falten gelegt ist, die Falten sich jedoch vertikal, d. h. parallel zur Gehäusemittelachse 38' erstrecken, kann mit der Faltvorrichtung gemäß Fig. 4 dann erzielt werden, wenn abweichend von den vorstehend beschriebenen Vorgehensweisen die Luftsackhülle sowohl durch die Steueröffnungen 32 in der Seitenwand 20' als auch durch die Steueröffnungen 18' im Bodenelement 12' angesaugt wird und die jeweiligen Drücke in geeigneter Weise zeitlich variiert werden.

Grundsätzlich ist es nicht erforderlich, eine geordnete und um die Gehäusemittelachse herum gleichbleibende Faltenstruktur zu erzeugen, sondern das erfindungsgemäße Faltverfahren und die erfindungsgemäße Faltvorrichtung ermöglichen auch die Erzeugung einer "chaotischen", nicht vorhersagbaren Faltstruktur, die dennoch ein optimales Entfalten des Luftsacks im Crashfall gewährleistet.

### Bezugszeichenliste

- 10, 10': Gehäuse
- 12, 12': Bodenelement
- 13, 13': Arbeitsplatte
- 14, 14': Luftsack
- 15: Spalt
- 16, 16': Oberteil
- 18, 18': Steueröffnungen
- 20, 20': Seitenwand
- 22: Anschlagfläche
- 24: Halteelement
- 26: Bodenplatte
- 27: Verankerungsstifte
- 28: Gasgenerator-Bereich
- 30: Zwischenraum
- 32: Steueröffnungen
- 34: Haube
- 36, 36': Steuerkanal
- 38, 38': Gehäusemittelachse

## Patentansprüche

1. Verfahren zum Falten eines aufblasbaren Luftsacks (14, 14') für Kraftfahrzeuge, welches die Schritte umfaßt,
- daß in einem Gehäuse (10, 10') ein zu faltender Luftsack ( 14, 14') mit seinem geschlossenen Ende an einem Oberteil (16, 16') des Gehäuses (10, 10') fixiert und mit seinem offenen Ende an einem dem Oberteil (16, 16') gegenüberliegenden Bodenelement (12, 12') derart befestigt wird, daß das Bodenelement (12, 12') das Innere des Luftsacks (14, 14') gegenüber dem Innenraum des Gehäuses (10, 10') abdichtet,
- daß das Gehäuse (10, 10') und das Bodenelement (12, 12') relativ zueinander aufeinander zu bewegt werden, und
- daß während der Relativbewegung der Druck innerhalb des Luftsacks ( 14, 14') oder des Luftsacks (14,14') und des Gehäuses (10, 10') variiert wird.

2. Faltverfahren nach Anspruch 1,
**dadurch gekennzeichnet,**
**daß** die Relativbewegung mit zumindest näherungsweise konstanter Geschwindigkeit durchgeführt wird.

3. Faltverfahren nach Anspruch 1 oder 2,
**dadurch gekennzeichnet,**
**daß** der Druck periodisch, bevorzugt zumindest näherungsweise sinusförmig und/oder mit abnehmender Amplitude variiert wird.

4. Faltverfahren nach einem der vorhergehenden Ansprüche,
**dadurch gekennzeichnet,**
**daß** der Druck lediglich innerhalb des Luftsacks (14) und derart variiert wird, daß der Druck abwechselnd höher und niedriger als ein mittlerer, bevorzugt dem Umgebungsdruck entsprechender Wert P₀ ist.

5. Faltverfahren nach einem der Ansprüche 1 bis 3,
**dadurch gekennzeichnet,**
**daß** der Druck innerhalb des Luftsacks (14') und des Gehäuses (10') derart variiert wird, daß er im Luftsack ( 14') stets höher und im Gehäuse (10') stets niedriger als ein mittlerer, bevorzugt dem Umgebungsdruck entsprechender Wert P'₀ ist, oder derart, daß er im Luftsack abwechselnd höher und niedriger als im Gehäuse, jedoch stets sowohl im Luftsack als auch im Gehäuse höher als ein bevorzugt dem Umgebungsdruck entsprechender Wert ist.

6. Faltverfahren nach einem der vorhergehenden Ansprüche,
**dadurch gekennzeichnet,**
**daß** innerhalb des Luftsacks (14, 14') und/ oder des Gehäuses (10, 10') eine inhomogene Druckverteilung erzeugt wird.

7. Vorrichtung zum Falten eines aufblasbaren Luftsacks (14, 14') für Kraftfahrzeuge, zur Durchführung eines Verfahrens nach einem der Ansprüche 1 bis 6, mit einem Gehäuse (10, 10') und einem Bodenelement (12, 12'), wobei im Gehäuse (10, 10') ein zu faltender Luftsack (14, 14') mit seinem geschlossenen Ende an einem dem Bodenelement (12, 12') gegenüberliegenden Oberteil (16, 16') des Gehäuses (10, 10') fixierbar und mit seinem offenen Ende am Bodenelement (12, 12') derart befestigbar ist, daß das Bodenelement (12, 12') das Innere des Luftsacks ( 14, 14') gegenüber dem Innenraum des Gehäuses (10, 10') abdichtet, wobei das Gehäuse (10, 10') und das Bodenelement (12, 12') relativ zueinander aufeinander zu bewegbar sind und das Bodenelement (12, 12') mit wenigstens einer Steueröffnung ( 18, 18') versehen ist, über die der Druck innerhalb des zu faltenden Luftsacks (14, 14') variierbar ist.

8. Faltvorrichtung nach Anspruch 7,
**dadurch gekennzeichnet,**
**daß** das Gehäuse (10, 10') und das Bodenelement (12, 12') zwischen einer Ausgangsstellung und einer Endstellung bewegbar sind, wobei der Abstand zwischen dem Oberteil (16, 16') und dem Bodenelement (12, 12') in der Ausgangsstellung der Länge des bevorzugt vollständig entfalteten Luftsacks (14, 14') entspricht.

9. Faltvorrichtung nach Anspruch 8,
**dadurch gekennzeichnet,**
**daß** der in der Endstellung vom Gehäuse (10, 10') und dem Bodenelement (12, 12') begrenzte Raum zumindest näherungsweise dem Raum entspricht, der in einem Luftsackmodul-Gehäuse für den gefalteten, bevorzugt die endgültige Packungsgröße aufweisenden Luftsack (14, 14') zur Verfügung steht.

10. Faltvorrichtung nach einem der vorhergehenden Ansprüche 7-9,
**dadurch gekennzeichnet,**
**daß** das Oberteil (16, 16') des Gehäuses (10, 10') als Kappe ausgebildet ist, die von der Seitenwand (20, 20') des Gehäuses (10, 10') außenseitig umfaßt ist, wobei bevorzugt das Oberteil (16, 16') von der Seitenwand (20, 20') des Gehäuses (10, 10') lösbar ist.

11. Faltvorrichtung nach Anspruch 8 oder 9 oder 10 sofern letzterer auf einem der Ansprüche 8 oder 9 rückbezogen ist,
**dadurch gekennzeichnet,**
**daß** der dem Bodenelement (12, 12') zugewandte Rand eines als Kappe ausgebildeten Oberteils (16, 16') des Gehäuses (10, 10') als Anschlagfläche (22) ausgebildet ist, die in der Endstellung mit dem Bodenelement (12, 12') oder mit einem auf dem Bodenelement (12, 12') angeordneten Luftsackmodul (24, 26) zusammenwirkt.

12. Faltvorrichtung nach Anspruch 11,
**dadurch gekennzeichnet,**
**daß** der zu faltende Luftsack (14, 14') mit einem Halteelement (24) und/oder einer Bodenplatte (26) des Luftsackmoduls (24,26) verbunden ist und am Bodenelement (12, 12') befestigbar ist.

13. Faltvorrichtung nach einem der vorhergehenden Ansprüche 7-12,
**dadurch gekennzeichnet,**
**daß** die dem Oberteil (16, 16') zugewandte Seite des Bodenelements (12, 12') einen entsprechend einem Gasgenerator für den zu faltenden Luftsack ( 14, 14') geformten Bereich (28) aufweist, in dem bevorzugt die Steueröffnung (18, 18') ausgebildet ist.

14. Faltvorrichtung nach einem der vorhergehenden Ansprüche 7-13,
**dadurch gekennzeichnet,**
**daß** in einer Ebene senkrecht zur Bewegungsrichtung die freie innere Querschnittsfläche des Gehäuses (10, 10') zwischen dem Bodenelement (12, 12') und dem Oberteil (16, 16') konstant und bevorzugt kreisförmig, quadratisch, rechteckig oder dreieckig ist.

15. Faltvorrichtung nach einem der vorhergehenden Ansprüche 7-13,
**dadurch gekennzeichnet,**
**daß** sich das Gehäuse in Richtung des Oberteils bevorzugt trichterartig verjüngt, wobei bevorzugt die freie innere Querschnittsfläche des Gehäuses in jeder Ebene senkrecht zur Bewegungsrichtung rechteckig ist.

16. Faltvorrichtung nach einem der vorhergehenden Ansprüche 7-15,
**dadurch gekennzeichnet,**
**daß** das Gehäuse (10') unter Ausbildung eines Zwischenraumes (30) von einer Haube (34) umgeben und mit wenigstens einer Steueröffnung (32) zum Zwischenraum (30) versehen ist, über die der Druck im Innenraum des Gehäuses (10') variierbar ist.

17. Faltvorrichtung nach einem der vorhergehenden Ansprüche 7-16,
**dadurch gekennzeichnet,**
**daß** das Gehäuse (10') und das Bodenelement (12, 12') oder nur das Bodenelement mit mehreren Steueröffnungen (32; 18, 18') versehen sind/ist, die zur Erzeugung einer bestimmten, vorzugsweise inhomogenen Druckverteilung über das Gehäuse (10') und das Bodenelement (12, 12') oder nur über das Bodenelement (12, 12') verteilt angeordnet und bevorzugt von unterschiedlicher Größe sind.

## Claims

1. Method for folding an inflatable air bag (14, 14') for motor vehicles, comprising the steps:
- in the housing (10, 10') an air bag (14, 14') to be folded is fixed with its closed end to an upper part (16, 16') of the housing (10, 10') and fastened with its open end to a floor element (12, 12' ) opposite the upper part (16, 16') in such a way that the floor element (12, 12') seals the interior of the air bag (14, 14') against the inner chamber of the housing (10, 10'),
- the housing (10, 10') and the floor element (12, 12') are moved towards one another relative to one another and
- during the relative movement the pressure inside the air bag (14, 14') or the air bag (14, 14') and the housing (10, 10') is varied.

2. Folding method according to claim 1, **characterised in that** the relative movement is carried out at at least approximately constant speed.

3. Folding method according to claim 1 or 2, **characterised in that** the pressure is varied periodically, preferably at least approximately sinusoidally and/or with decreasing amplitude.

4. Folding method according to one of the preceding claims, **characterised in that** the pressure is varied inside the air bag (14) only and in such a way that the pressure is alternately higher and lower than an average value P₀, preferably corresponding to the ambient pressure.

5. Folding method according to one of the claims 1 to 3, **characterised in that** the pressure inside the air bag (14') and the housing (10') is varied in such a way that it is always higher in the air bag (14') and always lower in the housing (10') than an average value P'₀, preferably corresponding to the ambient pressure, or in such a way that it is alternately higher and lower in the air bag than in the housing, but in both the air bag and the housing always higher than a value preferably corresponding to the ambient pressure.

6. Folding method according to one of the preceding claims, **characterised in that** an inhomogeneous pressure distribution is generated inside the air bag (14, 14') and/or the housing (10, 10').

7. Device for folding an inflatable air bag (14, 14') for motor vehicles, for carrying out a method according to one of claims 1 to 6, with a housing (10, 10') and a floor element (12, 12'), wherein in the housing (10, 10') an air bag (14, 14') to be folded can be fixed with its closed end to an upper part (16, 16') of the housing (10, 10') opposite the floor element (12, 12') and can be fastened with its open end to the floor element (12, 12') in such a way that the floor element (12, 12') seals the interior of the air bag (14, 14') against the inner chamber of the housing (10, 10'), wherein the housing (10, 10') and the floor element (12, 12') are movable towards one another relative to one another and the floor element (12, 12') is provided with at least one control orifice (18, 18') via which the pressure inside the air bag (14, 14') to be folded can be varied,

8. Folding device according to claim 7, **characterised in that** the housing (10, 10') and the floor element (12, 12') are movable between a starting position and an end position, wherein the distance between the upper part (16, 16') and the floor element (12, 12') in the starting position corresponds to the length of the preferably fully unfolded air bag (14, 14').

9. Folding device according to claim 8, **characterised in that** the space limited in the end position by the housing (10, 10') and the floor element (12, 12') corresponds at least approximately to the space available in an air bag module housing for the folded air bag (14, 14'), preferably having the final package size.

10. Folding device according to one of preceding claims 7 to 9, **characterised in that** the upper part (16, 16') of the housing (10, 10') is constructed as a cap, encircled on the outside by the side wall (20, 20') of the housing (10, 10'), wherein the upper part (16, 16') is preferably detachable from the side wall (20, 20') of the housing (10, 10').

11. Folding device according to claim 8 or 9 or 10, insofar as the latter relates back to one of claims 8 or 9, **characterised in that** the edge, facing the floor element (12, 12'), of an upper part (16, 16') of the housing (10, 10') constructed as a cap is constructed as a stop face (22) which in the end position cooperates with the floor element (12, 12') or with an air bag module (24, 26) arranged on the floor element (12, 12').

12. Folding device according to claim 11, **characterised in that** the air bag (14, 14') to be folded is connected to a holding element (24) and/or a floor plate (26) of the air bag module (24, 26) and can be fastened to the floor element (12, 12').

13. Folding device according to one of preceding claims 7 to 12, **characterised in that** the side of the floor element (12, 12') facing the upper part (16, 16') has an area (28) formed corresponding to a gas generator for the air bag (14, 14') to be folded, in which preferably the control orifice (18, 18') is constructed.

14. Folding device according to one of preceding claims 7 to 13, **characterised in that** in a plane perpendicular to the direction of movement the free inner cross-sectional face of the housing (10, 10') between the floor element (12, 12') and the upper part (16, 16') is constant and preferably circular, square, rectangular or triangular.

15. Folding device according to one of preceding claims 7 to 13, **characterised in that** the housing tapers, preferably in a funnel shape, in the direction of the upper part, wherein preferably the free inner cross-sectional face of the housing is rectangular in any plane perpendicular to the direction of movement.

16. Folding device according to one of preceding claims 7 to 15, **characterised in that** the housing (10') is surrounded by a hood (34), thus forming an intermediate chamber (30), and is provided with at least one control orifice (32) to the intermediate chamber (30), via which the pressure in the inner chamber of the housing (10') can be varied.

17. Folding device according to one of preceding claims 7 to 16, **characterised in that** the housing (10') and the floor element (12, 12') or the floor element only are/is provided with several control orifices (32; 18, 18'), which are arranged distributed over the housing (10') and the floor element (12, 12') or over the floor element (12, 12') only and are preferably of different size, to generate a specific, preferably inhomogeneous pressure distribution.

## Revendications

1. Procédé de pliage d'un coussin gonflable (14, 14') pour véhicules automobiles, qui comprend les étapes
- par lesquelles un coussin gonflable (14, 14') à plier dans un boîtier (10, 10') est fixé avec son extrémité fermée contre une partie supérieure (16, 16') du boîtier (10, 10') et avec son extrémité ouverte contre un élément de fond (12, 12') situé en face de la partie supérieure (16, 16'), de telle sorte que l'élément de fond (12, 12') ferme hermétiquement l'intérieur du coussin gonflable (14, 14') par rapport au volume intérieur du boîtier (10, 10'),
- par lesquelles le boîtier (10, 10') et l'élément de fond (12, 12') sont déplacés relativement l'un sur l'autre et
- par lesquelles, pendant le mouvement relatif, on fait varier la pression à l'intérieur du coussin gonflable (14, 14') ou du coussin gonflable (14, 14') et du boîtier (10, 10').

2. Procédé de pliage selon la revendication 1, **caractérisé en ce que** le mouvement relatif est effectué au moins sensiblement à une vitesse constante.

3. Procédé de pliage selon la revendication 1 ou 2, **caractérisé en ce que** la pression varie périodiquement de préférence au moins sensiblement sous la forme d'une courbe sinusoïdale et/ou avec une amplitude décroissante.

4. Procédé de pliage selon l'une quelconque des revendications précédentes, **caractérisé en ce que** l'on fait varier la pression uniquement à l'intérieur du coussin gonflable (14) et de telle sorte que la pression est en alternance supérieure et inférieure à une valeur moyenne P₀ correspondant de préférence à la pression atmosphérique.

5. Procédé de pliage selon l'une quelconque des revendications 1 à 3, **caractérisé en ce que** l'on fait varier la pression à l'intérieur du coussin gonflable (14') et du boîtier (10'), de telle sorte que dans le coussin gonflable (14') elle est toujours supérieure et dans le boîtier (10') elle est toujours inférieure à une valeur moyenne P'₀, correspondant de préférence à la pression atmosphérique, ou de telle sorte que dans le coussin gonflable elle est en alternance supérieure et inférieure à celle du boîtier, mais reste toujours, dans le coussin gonflable et dans le boîtier, supérieure à une valeur correspondant de préférence à la pression atmosphérique.

6. Procédé de pliage selon l'une quelconque des revendications précédentes, **caractérisé en ce qu'**une répartition inhomogène de la pression est produite à l'intérieur du coussin gonflable (14, 14') et/ou du boîtier (10, 10').

7. Dispositif de pliage d'un coussin gonflable (14, 14') pour véhicules automobiles, destiné à la mise en oeuvre d'un procédé selon l'une quelconque des revendications 1 à 6, comprenant un boîtier (10, 10') et un élément de fond (12, 12'), un coussin gonflable (14, 14') à plier étant destiné à être fixé dans le boîtier (10, 10') avec son extrémité fermée contre une partie supérieure (16, 16') du boîtier située en face de l'élément de fond (12, 12') et avec son extrémité ouverte contre l'élément de fond (12, 12'), de telle sorte que l'élément de fond (12, 12') ferme hermétiquement l'intérieur du coussin gonflable (14, 14') par rapport au volume intérieur du boîtier (10, 10'), le boîtier (10, 10') et l'élément de fond (12, 12') pouvant être déplacés relativement l'un sur l'autre et l'élément de fond (12, 12') étant muni d'au moins un orifice de commande (18, 18'), par lequel on peut faire varier la pression à l'intérieur du coussin gonflable (14, 14') à plier.

8. Dispositif de pliage selon la revendication 7, **caractérisé en ce que** le boîtier (10, 10') et l'élément de fond (12, 12') peuvent être déplacés entre une position de sortie et une position finale, la distance entre la partie supérieure (16, 16') et l'élément de fond (12, 12') dans la position de sortie étant égale à la longueur du coussin gonflable (14, 14') de préférence complètement déplié.

9. Dispositif de pliage selon la revendication 8, **caractérisé en ce que** l'espace délimité dans la position finale entre le boîtier (10, 10') et l'élément de fond (12, 12') correspond au moins approximativement au volume disponible, dans un boîtier du module pour coussin gonflable, pour le coussin gonflable (14, 14') plié, présentant de préférence la dimension de conditionnement finale.

10. Dispositif de pliage selon l'une quelconque des revendications précédentes, **caractérisé en ce que** la partie supérieure (16, 16') du boîtier (10, 10') est conçue sous forme de calotte, qui est entourée sur le côté extérieur par la paroi latérale (20, 20') du boîtier (10, 10'), la partie supérieure (16, 16') pouvant être de préférence désolidarisée de la paroi latérale (20, 20') du boîtier (10, 10').

11. Dispositif de pliage selon la revendication 8 ou 9 ou 10, dans la mesure où cette dernière se réfère à l'une des revendications 8 ou 9, **caractérisé en ce que** le bord, orienté vers l'élément de fond (12, 12'), d'une partie supérieure (16, 16') du boîtier (10, 10'), conçue en forme de calotte, est réalisé sous forme de surface de butée (22) qui, dans la position finale, coopère avec l'élément de fond (12, 12') ou avec un module pour coussin gonflable (24, 26) disposé sur l'élément de fond (12, 12').

12. Dispositif de pliage selon la revendication 11, **caractérisé en ce que** le coussin gonflable (14, 14') à plier est assemblé à un élément de support (24) et/ou une plaque de base (26) du module pour coussin gonflable (24, 26) et peut être fixé contre l'élément de fond (12, 12').

13. Dispositif de pliage selon l'une quelconque des revendications 7 à 12, **caractérisé en ce que** la face de l'élément de fond (12, 12') orientée vers la partie supérieure (16, 16') comporte une zone (28) formée de manière correspondante à un générateur de gaz pour le coussin gonflable (14, 14') à plier, dans laquelle est réalisé de préférence l'orifice de commande (18, 18').

14. Dispositif de pliage selon l'une quelconque des revendications 7 à 13, **caractérisé en ce que** la surface transversale intérieure libre du boîtier (10, 10') entre l'élément de fond (12,12') et la partie supérieure (16, 16') est constante dans un plan perpendiculaire à la direction du mouvement et peut être de préférence circulaire, carrée, rectangulaire ou triangulaire.

15. Dispositif de pliage selon l'une quelconque des revendications 7 à 13, **caractérisé en ce que** le boîtier se rétrécit de préférence de manière conique en direction de la partie supérieure, la surface transversale intérieure libre du boîtier étant de préférence rectangulaire dans chaque plan perpendiculaire à la direction du mouvement.

16. Dispositif de pliage selon l'une quelconque des revendications 7 à 15, **caractérisé en ce que** le boîtier (10') est entouré d'une hotte (34) en laissant un espace intermédiaire (30) et est muni d'au moins un orifice de commande (32) vers l'espace intermédiaire (30), à travers lequel on peut faire varier la pression dans le volume intérieur du boîtier (10').

17. Dispositif de pliage selon l'une quelconque des revendications 7 à 16, **caractérisé en ce que** le boîtier (10') et l'élément de fond (12, 12') ou uniquement l'élément de fond (12, 12') sont/est muni(s) de plusieurs orifices de commande (32; 18, 18') qui, pour générer une répartition déterminée de la pression, de préférence inhomogène, sont répartis sur le boîtier (10') et l'élément de fond (12, 12') ou seulement sur l'élément de fond (12, 12') et sont réalisés de préférence dans différentes dimensions.
